## Europäisches Patentamt

## European Patent Office

## Office européen des brevets

(11) Veröffentlichungsnummer: **0 104 310**
**B1**

(12) # EUROPÄISCHE PATENTSCHRIFT

(19)

(45) Veröffentlichungstag der Patentschrift:
**19.02.86**

(21) Anmeldenummer: **83104049.8**

(22) Anmeldetag: **25.04.83**

(51) Int. Cl.⁴: **F 16 L 47/06,** F 16 L 21/04,
F 16 J 15/00

(54) **Dichtungsring und Muffe mit einem solchen Dichtungsring für eine Rohrsteckverbindung.**

(30) Priorität: **29.09.82 DE 3236120**

(43) Veröffentlichungstag der Anmeldung:
**04.04.84 Patentblatt 84/14**

(45) Bekanntmachung des Hinweises auf die Patenterteilung:
**19.02.86 Patentblatt 86/8**

(84) Benannte Vertragsstaaten:
**AT BE CH DE FR GB IT LI NL SE**

(56) Entgegenhaltungen:
**DE - A - 2 736 851**
**DE - A - 2 812 196**
**DE - U - 1 879 791**
**GB - A - 851 363**
**GB - A - 1 547 852**
**US - A - 2 473 284**
**US - A - 4 275 909**

(73) Patentinhaber: **WOCO Franz-Josef Wolf & Co.,
Sprudelallee 19, D-6483 Bad Soden-Salmünster (DE)**

(72) Erfinder: **Wolf, Franz-Josef, Sprudelallee 19, D-6483 Bad
Soden-Salmünster (DE)**
Erfinder: **Lauer, Hansjörg, Marburger Strasse 5,
D-6483 Bad Soden-Salmünster (DE)**

(74) Vertreter: **Jaeger, Klaus, Dr. et al, JAEGER & PARTNER
Patentanwälte Bergstrasse 48 1/2,
D-8035 München-Gauting (DE)**

ACTORUM AG

Beschreibung

Die Erfindung betrifft einen Dichtungsring der im Oberbegriff des Patentanspruchs 1 genannten Art.

Die Erfindung bezieht sich insbesondere auf Steckverbindungen von Rohren, die mit relativ guter Masshaltigkeit herstellbar sind, also auf Steckverbindungen vor allem von Kunststoffrohren, Gusseisenrohren und Stahlrohren.

Zur Herstellung von Rohrsteckverbindungen bei Rohrsystemen der genannten Art werden noch heute fast ausschliesslich Rundschnurringe eingesetzt, nämlich sogenannte O-Ringe oder Rollringe. Dass diese Dichtungsringe zahlreiche Nachteile aufweisen, ist seit langem bekannt. Die beiden hervorstechenden Nachteile der Rundschnur-Dichtungsringe sind zum einen die Verlierbarkeit der Dichtungsringe, zum anderen eine nicht zuverlässig reproduzierbare bzw. einstellbare Dichtwirkung durch Lageabweichungen der Ringe.

Zur Behebung dieser Nachteile der Rundschnurringe ist bereits aus dem deutschen Gebrauchsmuster DE-U Nr. 1879791 ein Dichtungsring bekannt, der dadurch gekennzeichnet ist, dass der manschettenartig ausgebildete Dichtungsring mit angeformtem Verankerungs- oder Halteteil im Querschnitt zwischen den beiden Randzonen nach radial innen abgeknickt ist. Wenngleich dieser bekannte Dichtungsring nach heutigen Anforderungen noch immer als verlierbar bezeichnet werden muss, so weist dieser bekannte Dichtungsring doch hinsichtlich seiner Dichtfunktion gegenüber den Rundschnurringen wesentliche Vorteile auf. Dass dieser Dichtungsring dennoch in den letzten zwanzig Jahren die Rundschnurringe nicht aus der Praxis hat verdrängen können, liegt an den Herstellungskosten des bekannten Dichtungsringes. Dieser Dichtungsring muss in aufwendigen Formwerkzeugen hergestellt werden, die mit relativ starken Winklungen und Hinterschnitten in den Nestern ausgestattet sein müssen und daher je Werkzeug mit nur wenigen Nestern versehen sein können. Dies beeinträchtigt die Produktivität bei der Herstellung der Ringe. Teure und aufwendige Werkzeuge, die eine nur relativ geringe Produktivität erlauben, schlagen sich jedoch notgedrungen im Preis des Produktes, nämlich des Dichtungsringes, nieder.

Angesichts dieses Standes der Technik liegt der Erfindung die Aufgabe zugrunde, einen Dichtungsring der eingangs genannten Art dahingehend zu verbessern, dass er mit einfachem Formwerkzeug und hohem Durchsatz kostengünstig herstellbar ist und mit einfachen Hilfsmitteln unverlierbar montierbar wird. Der Erfindung liegt weiterhin die Aufgabe zugrunde, eine zur Verwendung der Ringe speziell angepasste Muffe sowie Mittel zur Fixierung der Ringe in einer Muffe zu schaffen.

Zur Lösung dieser Aufgabe schafft die Erfindung einen Dichtungsring, der kennzeichnend die im Anspruch 1 genannten Merkmale aufweist.

Die weiteren Teilaspekte der Erfindung sind Gegenstand der Unteransprüche.

Der Kerngedanke der Erfindung liegt vor allen Dingen darin, einen Dichtungsring und insbesondere einen Lippendichtungsring zu schaffen, der äusserst kostengünstig hergestellt werden kann. Hierbei soll dieser Lippendichtungsring so konzipiert sein, damit die vorausgehend angesprochenen Probleme der festen vormontierten Halterung an der Muffe, nicht angefasstem Spitzende und dessen Abwinkelbarkeit um einen relativ kleinen Winkel, sowie selbstverständlich eine zuverlässige Abdichtung gelöst werden.

Dies erreicht man dadurch, dass der Dichtungs- bzw. Lippendichtungsring ein Schnurprofil aufweist, das fertigungstechnisch oder im nichteingebauten Zustand des Dichtungsringes gesehen, auf der radial inneren Seite etwa den Verlauf einer Geraden aufweist. Das radial äussere Profil dazu weist mindestens einen Haltebereich und einen damit zusammenhängenden Abstützbereich gegen die Innenwandung der Muffe auf. Sowohl der Abstütz- als auch der Haltebereich erstrecken sich mit ihrer Aussenfläche quer zur Geraden, wobei im wesentlichen sowohl keine Hinterschneidung der Aussenflächen beider Bereiche gegenüber der Geraden als auch keine Hinterschneidungen an diesen Bereichen selbst vorgesehen sind. Der eigentliche Dichtungsbereich gegenüber der Aussenwand des Spitzendes wird bei diesem Dichtungsring durch den Übergang zwischen Abstützbereich und der Geraden gebildet.

Dass sowohl der Haltebereich als auch der Abstützbereich im Prinzip ohne Hinterschneidung gegenüber der im Schnurprofil die radiale innere Seite bildenden Gerade vorgesehen sein sollen, bedeutet, dass die Aussenflächen des Halte- bzw. Abstützbereiches etwa senkrecht zur Geraden angeordnet sind oder mit dieser einen spitzen Winkel bilden. Andererseits gilt die Forderung, im wesentlichen ohne Hinterschneidungen auch für das der Geraden gegenüberliegende radial äussere Profil, um vom Herstellungsverfahren gesehen ein leichtes Entformen des Dichtungsringes zu ermöglichen. Selbstverständlich können hierbei kleine Vorsprünge und die dadurch verursachten minimalen Hinterschneidungen, z.B. ein am Haltesteg angeformter Haltevorsprung im Hinblick auf den Entformungsvorgang vernachlässigt werden, da die dadurch bedingte Rückhaltekraft in der Form nur minimal ist und beim Entformen ohne nachteilige Auswirkungen rasch überwunden werden kann.

Ein auf diesem Prinzip aufgebauter Lippendichtungsring hat ein im wesentlichen L-förmiges Schnurprofil mit einem Längsschenkel und einem davon abstehenden Fuss. Zur Montagehalterung des Dichtungsringes an der Muffe ist am Kopf bzw. oberen Bereich des Längsschenkels ein Steg etwa parallel zum Fuss angeordnet. Beim Einsetzen des Dichtungsringes in die Muffe wird der Steg auf der radialen Stirnfläche der Muffe aufgesetzt, während das Fussende als Abstützung gegenüber der Innenwand der Muffe dient. Durch diese Abstützung wird die ursprünglich im Schnitt geradlinige Aussenfläche des Längsschenkels zu einer Krümmungslinie durchgebogen, wobei die Ringkante zwischen Längsschenkel und Fuss des Dichtungsringes die Dichtlippe bildet.

Diese Struktur des Dichtringes und insbesondere des Lippendichtringes kann in vergleichbar kostengünstiger Weise hergestellt werden wie die bisher verwendeten Rundschnurdichtringe.

Während Lippendichtungsringe bisher üblicherweise in Formwerkzeugen hergestellt wurden, in denen die entsprechenden Formnester in der Durchmesserebene der Dichtungsringe nebeneinander angeordnet waren, ging man bei der Herstellung von Rundschnurdichtringen bereits den Weg, deren Formnester axial versetzt um einen im wesentlichen zylindrischen Formkern anzuordnen. In Kompletierung zum Formkern wurden dabei diesen umschliessende Formwerkzeuge vorgesehen.

Bedingt durch den einfachen Kreisquerschnitt der Rundschnurdichtringe konnten daher in einem Formungsvorgang eine Vielzahl von Rundschnurdichtringen gefertigt werden. Durch das relativ komplizierte Profil insbesondere von Lippendichtungsringen konnte dieses Herstellungsverfahren bisher für diese kompliziertere Formen nicht verwendet werden.

Erst die Profilgebung des Lippendichtungsringes mit einer im wesentlichen geradlinigen inneren Seite und einem dieser Seite gegenüberliegenden Profil, das wie die Aussenflächen keine bzw. nur minimale Hinterschneidungen vorsieht, ermöglichte das kostengünstige Herstellungsverfahren. Bei diesem Verfahren wird in eine Vielzahl von axial hintereinander angeordneten Formnestern, die eine Axialerstreckung von der Gesamthöhe des Dichtungsringes aufweisen, eine unvernetzte Formmasse eingedrückt. Für diese Formmasse kann üblicherweise eine Kautschukmasse verwendet werden, der geeignete Weichmacher, Füllstoffe und Gleitmittel beigemischt sind. Üblicherweise wird für dieses Verfahren das Spritzgiessverfahren gewählt. Es sind jedoch auch andere Verfahren wie Formpressverfahren denkbar.

Nach Vernetzen der Formmasse wird das Formwerkzeug geöffnet und die auf einem axialen zylindrischen Formkern verbleibenden Lippendichtungsringe können verwendungsrichtig mittels eines Abstreifers vom Formkern geschoben werden.

Durch das Profil des Lippendichtungsringes und das gewählte Verfahren können in einem Herstellungsschritt eine grössere Anzahl von Dichtungsringen gefertigt werden. Während beispielsweise bei der Anordnung der Formnester in der Durchmesserebene etwa vier oder acht Lippendichtungsringe auf einmal gefertigt werden konnten, können nunmehr etwa 15 oder 20 gegebenenfalls auch mehr Dichtungsringe auf einmal hergestellt werden.

Dieses Verfahren kann geeigneterweise mit einer Vorrichtung realisiert werden, die einen im wesentlichen zylindrischen Formkern aufweist. Diesen Formkern umschliessen im geschlossenen Zustand zwei etwa halbschalige Formgesenke, die in axialer Richtung des Formkernes mit einer Längenabmessung von etwa der Höhe des Gesamtdichtungsringes eine Vielzahl von Formnestern für den Dichtungsring aufweisen.

Die Durchmesserebene der so gefertigten Dichtungsringe fällt dabei mit der Durchmesserebene des Formkernes zusammen, so dass bei etwa abmessungsmässig vergleichbaren Formwerkzeugen eine grössere Stückzahl von Dichtungsringen pro Formungsgang hergestellt werden kann als im bisher üblichen Verfahren. Zudem verbleiben die Dichtungsringe beim Öffnen des Formwerkzeuges durch Auseinanderfahren des oberen und unteren Formgesenkes vom Formkern, auf dem Formkern. Durch die Ausbildung des Formkernes mit einer relativ glatten ebenen Formfläche und seine axiale Ausfahrbarkeit, ist es möglich, die um den Formkern herum angeordneten Lippendichtungsringe beispielsweise mittels eines gabelförmigen oder ringförmigen Abstreifers in einem Verfahrensschritt vom Formkern abzuschieben.

Ein derartiger Dichtungs- bzw. Lippendichtungsring ist besonders für eine Rohrsteckverbindung geeignet, wobei der Dichtungsring dann im wesentlichen axial längs der Muffeninnenwand in die Muffe hineinragt und mit seinem radial nach innen ragenden Bereich gegen die Aussenwand des eingeschobenen Spitzendes abdichtet. Zur axialen Fixierung beim Einschieben des Spitzendes wird der Dichtungsring vorzugsweise durch eine Halteeinrichtung stirnseitig an der Muffe festgelegt. Bei Verwendung eines Halteringes entspricht dessen kleinster Innendurchmesser in etwa dem Aussendurchmeser des Spitzendes oder ist geringfügig grösser als dieser.

Anstelle des Halteringes, der beispielsweise als Klemmring in der Form eines Kunststoffclips den Dichtring axial an der Stirnseite der Muffe fixiert, kann das Muffenende selbst in Form eines Kragens den Dichtungsring festlegen, oder der Dichtungsring kann über eine Abstufung zum Muffenende fest eingeklebt sein.

Bei Verwendung eines Lippendichtungsringes in L-Form, wird geeigneterweise am L-Kopf ein Steg vorgesehen, der mindestens teilweise auf der radialen Stirnfläche der Muffe aufliegen kann, wodurch der Dichtungsring selbsthaltend in die Muffe einsetzbar ist. Das Fussende des L-förmigen Dichtungsringes liegt dabei an der Innenwand der Muffe an, wodurch der obere Bereich des Längsschenkels des Lippendichtungsringes gegen die Innenwand der Muffe nach radial aussen vorgespannt wird und im Zusammenwirken mit dem Steg somit die eigenständige Halterung des Lippendichtungsringes nach seinem Einsetzen in die Muffe möglich ist. Die Auslegung des Halteringes zur radialen Einspannung des Steges und des axial äusseren Bereiches des Längsschenkels des Dichtungsringes gegen den Endbereich der Muffe, stellt sicher, dass beim Einschieben des Spitzendes der Lippendichtungsring stirnseitig an der Muffe festliegt und nicht losgelöst und in den Muffeninnenraum hineingezogen werden kann. In der L-förmigen Ausbildug des Lippendichtungsringes mit dem oberen Steg liegt jedoch auch das Fussende des Dichtungsringes mit Vorspannung an der Innenwand der Muffe, wobei diese Vorspannung aus der Materialverformung aufgrund der Durchbiegung der ursprünglich geradlinigen Aussenfläche in Richtung zur Innenwand der Muffe resultiert. Das Profil dieses Dichtungsringes führt beim stirnseitigen Einsetzen des Dichtungsringes gegen die in diesem Bereich geradlinige Innenwand der Muffe zu einer Krümmung des Längsschenkels, wodurch die Ringkante zwischen Fuss und Längsschenkel radial nach innen ragt und den Dichtungsbereich bzw. die Dichtlippe gegen die Aussenwand des Spitzendes bildet.

Eine derartige Rohrsteckverbindung mit einem beschriebenen Lippendichtungsring hat den Vorteil, dass für das Einsetzen des Dichtungsringes zunächst kein weiteres Hilfsmittel benötigt wird, da der Dichtungsring durch den Steg und die Materialverspannung unkompliziert und selbsthaltend am Muffenende angeordnet werden kann. Die zusätzliche Anbringung eines Halteringes z.B. als Klemmring, dient zunächst der weiteren radialen Verspannung des Dichtungsringes mit dem Muffenende. Primär jedoch ist dieser Haltering dazu bestimmt, beim Einschieben des Spitzendes ein axiales Herausziehen des Dichtungsringes aus dem Muffenende zu verhindern.

Die Vormontage der kompletten, mit dem Dichtungsring und dem Haltering versehenen Muffe kann bei planer Ausbildung der radialen äusseren Stirnflächen des Halteringes und des Steges des Dichtungsringes, die zum einzuschiebenden Spitzende zeigen, auch vollautomatisch z.B. mittels Saugkopfgreifern erfolgen. Diese Vormontage stellt zudem sicher, dass jede Muffe mit einem Dichtungsring versehen ist und der Zusammenbau mit dem Spitzende daher in kürzerer Zeit und damit kostensparend erfolgen kann.

Der Haltering ist vorzugsweise mit einer Selbstverriegelungseinrichtung, z.B. eines Nasenvorsprunges ausgebildet, der in eine komplementäre Ausnehmung in der Aussenwand der Muffe einrastet. In einer anderen Ausführungsform, beispielsweise bei Kunststoffrohren, kann die Befestigung des Halteringes mit der Muffe durch Kunststoffverschweissen erfolgen.

Die leichte Verformbarkeit des eingesetzten Dichtungsringes nach radial aussen im unteren Bereich des Längsschenkels und des Fusses, ermöglichen es, dass ein nicht angefastes Spitzende verwendet werden kann. Auch dies stellt einen kostensparenden Aspekt dar, da das entsprechende Spitzende vom Rohrstrang nur abgeschnitten werden braucht, ohne weiter bearbeitet werden zu müssen.

Obwohl eine derartige Rohrsteckverbindung mit dem entsprechenden Lippendichtungsring vorzugsweise bei massgenau gut herstellbaren Kunststoffrohren verwendet werden kann, kann es selbstverständlich auch bei Gusseisenrohren oder Rohren aus anderen Materialien wie z.B. Steinzeugrohren zum Einsatz kommen. Bei letzteren, die in der Regel grössere Toleranzabweichungen aufweisen, wird der Lippendichtungsring geeigneterweise mit Klebeversion gegen die Muffeninnenwand verwendet.

Bei der Wahl des Lippendichtungsringes mit einem vorzugsweise L-förmigen Schnurprofil mit Längsschenkel und Fuss, und einem am Kopf etwa parallel zum Fuss angeordnetem Steg zur Montagehalterung des Dichtungsringes, ist gewährleistet, dass im Herstellungsverfahren dieser Dichtungsring verwendungsrichtig vom Formkern geschoben werden kann. Der Dichtungsring liegt nach dem Entformen bereits einbaufähig vor. Weitere Hilfsarbeitsschritte, wie sie beispielsweise bei anderen im Spritzgiessverfahren hergestellten Produkten, die z.B. durch die Lage der tatsächlichen Aussenseite radial innen und die Lage der tatsächlichen Innenseite aussen erst umgekehrt werden müssen, sind bei diesem Lippendichtungsring und dem gewählten Verfahren nicht erforderlich.

Die Lage der Aussenflächen des Längsschenkels und des Fusses des Dichtungsringes zueinander werden vorzugsweise senkrecht gewählt, was den Entformungsvorgang erleichtert und zum anderen eine stabile aber auch gut abdichtende Lippendichtung an der Ringkante liefert. Im Innenbereich, d.h. bei eingesetztem Lippendichtungsring in Richtung zur Innenwand der Muffe zeigend, gehen der Längsschenkel und der Fuss kontinuierlich ineinander über, wobei Längsschenkel und Fuss von den jeweiligen Enden her gesehen zum Übergangsbereich stärker werdend ausgebildet sind. Der kontinuierliche Übergang ist ebenfalls eine Entformungserleichterung. Er verhindert aber beim Einbau und vor allen Dingen bei eingesetztem Spitzende eine Rissbildung und Beschädigung aufgrund der gerade in diesem Bereich starken Verformungskräfte des Dichtungsringes.

Durch die Abrundung der Fussspitze besteht die Möglichkeit, dass die Fussspitze beim Einschieben des Spitzendes axial leicht nach innen an der Innenwand sozusagen entlang gleiten kann. Sofern dies auftritt, ist durch die Ausbildung einer Abschrägung bzw. Stufe an der Innenwand der Muffe sichergestellt, dass nur bis zu diesem Punkt das abgerundete Fussende des Dichtungsringes eventuell auswandern kann. An der Abschrägung bzw. Stufe wird das Fussende bzw. der Dichthammer gestoppt und bildet dort einen Dichtungsring an der Innenwand der Muffe gegenüber einem aus dem Inneren des Muffeninnenraumes herauswirkenden Druck.

Die axiale leichte Verschiebung des Fussendes nach innen erleichtert das Einschieben des nicht angefasten Spitzendes in die Muffe, da die nach radial innen vorstehende Dichtlippe gerade in der Anfangsphase nicht allein durch eine Verformungsverpressung des Materials in diesem Bereich leicht nach radial aussen bewegt werden muss. Vielmehr erleichtert in der Anfangsphase des Einschiebens des Spitzendes das axiale geringfügige Auswandern des Fussendes die radial nach aussen gerichtete Bewegung im Ringkantenbereich.

Sofern auch bei abgerundetem Fussende dieses beim Einschieben des Spitzendes relativ lagestabil an der Innenwand der Muffe angeordnet bleibt, bietet es sich an, die Fussspitze mit einer Verformungsausnehmung, z.B. mit einem im Querschnitt dreieckförmigen Ringkanal, und insgesamt mit einem breiteren Fussende zu versehen. Hierdurch kann sichergestellt werden, dass in der Anfangsphase des Einsetzens des Spitzendes das leichte radial nach aussen gerichtete Auswandern des Dichtungsringes und insbesondere des Dichtlippenbereiches nicht durch eine reine Werkstoffverpressung, sondern durch eine Änderung des Verformungshohlraumes im Fuss des Dichtungsringes oder des Hohlraumes zwischen Fussende und dem oberen Bereich des Längsschenkels und der Innenwand der Muffe vorsichgeht.

Der Fuss des Dichtungsringes ist vorteilhafterweise länger als der Steg zur Montagehalterung ausgebildet und hat insbesondere etwa eine Länge von der zweifachen Länge des Steges. Hierdurch wird bei einem derart eingesetzten Dichtungsring durch das Spreizen des Dichtungsringes zwischen Fuss und dem oberen Bereich des Längsschenkels die gegen die Aussenwand des Spitzendes wirkende Rückstellkraft und damit die Dichtwirkung verbessert. Zur zuverlässigeren Halterung an der radialen Stirnfläche der Muffe weist der Steg einen zum Fuss zeigenden Haltevorsprung auf. Dieser Haltevorsprung dient einerseits zu einer genauen Anordnung des Steges und damit des gesamten Dichtungsringes am Muffenende. Der Haltevorsprung hat aber primär die Funktion, ein Ausweichen des Steges beim Einsetzen während der Vormontage nach radial innen zu verhindern. Fertigungstechnisch ist der Haltevorsprung nur mit einer geringen Axialerstreckung bezogen auf den eingebauten Zustand auszulegen, damit das Entformen der angrenzenden Hinterschneidung durch die Verformungselastizität des Haltevorsprungs beim Öffnen des Formwerkzeuges unberücksichtigt bleiben kann.

Zur Verbesserung der Dichtwirkung an der Innenwand der Muffe kann der Längsschenkel des Dichtungsringes im mittleren Bereich seiner Innenfläche mit kleinen Dichtlippen oder Dichtfahnen versehen sein. Bei eingeschobenem Spitzende werden diese kleinen, zusätzlichen Dichtlippen gegen die Innenwand der Muffe gedrückt, so dass die im oberen Bereich des Längsschenkels vorhandene Flächendichtung durch diese kleinen Lippendichtungen im mittleren Bereich ergänzt wird. In ähnlicher Weise kann auch die normalerweise nur eine Lippendichtung bildende Ringkante mit einem im Radius etwas grösseren Abrundungsbereich hergestellt werden. An diesem Abrundungsbereich selbst können dann zur Erreichung einer Lippendichtwirkung mehrere kleine Ringdichtrippen geformt sein. Diese Ringdichtrippen erlauben einerseits ein leichtes Einschieben des Spitzendes, wobei andererseits aber eine günstige Dichtwirkung erzielt wird.

Der verfahrenstechnische Grundgedanke ist darin zu sehen, eine raumsparende Anordnung der Formnester im Formwerkzeug zu erreichen und im Hinblick auf eine kostengünstige Massenproduktion von Dichtungsringen die Dichtungsringe in ihrer einzubauenden Lage, d.h. verwendungsrichtig, entformen zu können.

Bei im Prinzip L-förmigen Lippendichtungsringen werden diese im wesentlichen an ihrer planen Aussenfläche des Längsschenkels ausgeschoben. Unter im wesentlichen planen Aussenfläche werden hierbei auch noch Flächenkonfiguration verstanden, die ein leichtes, verwendungsrichtiges Ausschieben der Dichtungsringe ohne Beschädigung derselben zulassen. Da die Ringkante und der Fuss bzw. Dichthammer eine grössere Materialstärke als der zu Montagezwecken vorgesehene Steg haben, wird der Steg vorzugsweise zunächst vom Formkern geschoben und nachfolgend der Bereich der Ringkante, um leichter entformen zu können und Beschädigungen des Dichtungsringes zu vermeiden.

Die zur Durchführung des Verfahrens vorgesehene Vorrichtung weist vorzugsweise zwei halbschalige Formgesenke auf, die in geeigneter Weise den wesentlichen zylindrischen Formkern etwa 180° umschliessen. Diese Formgebung gestattet es, in Verbindung mit der Profilgestaltung des Dichtungsringes, wobei im wesentlichen keine Hinterschneidungen vorgesehen werden, ein materialschonendes und leichtes Öffnen des Formwerkzeuges durchzuführen. Üblicherweise sind das obere und das untere Formgesenke zum Öffnen des Formwerkzeuges im wesentlichen quer zur Längsachse des Formkernes bewegbar, wobei die Bewegungsrichtung vorzugsweise senkrecht zur Längsache erfolgt. Nach dem Öffnen des Formwerkzeuges und dem Auseinanderfahren der Formgesenke vom Formkern wird eine Abstreifeinrichtung, die den zylindrischen Formkern mindestens teilweise umfasst, und der Formkern in axialer Richtung relativ zueinander bewegt, um die in einem Verformungsvorgang gefertigten Dichtungsringe nacheinander axial vom Formkern abstreifen zu können. Dieses Abstreifen der Dichtungsringe geschieht vorzugsweise dadurch, dass zunächst der Formkern in axialer Richtung aus dem Bereich der Formgesenke ausgefahren wird. Nach Ansetzen einer gabelartigen Abstreifeinrichtung am letzten Dichtungsring wird durch Zurückziehen des Formkernes die Reihenfolge der einzelnen Dichtungsringe vom Kern ausgeschoben.

Die Vormontage eines Lippendichtungsringes und insbesondere eines L-förmigen Lippendichtungsringes erfolgt so gegen die radiale Stirnfläche der Muffe und deren Innenwand, dass zwischen dem oberen Bereich des Längsschenkels, der aufgrund der Durchbiegung des Längsschenkels an der Innenwand der Muffe anliegt, und der Anlage des Fussendes des Dichtungsringes axial weiter innen an der Muffeninnenwand, zwischen Fussende und dem oberen Bereich des Längsschenkels ein Hohlraum gebildet wird. Bei etwa dreieckförmiger Konfiguration dieses Luftraumes bildet die Innenwand der Muffe die Hypotenuse. Zur Erreichung der Vorspannung beim eingesetzten Dichtungsring ist es ganz wesentlich, dass der radiale äussere Durchmesser am oberen Bereich des Längsschenkels dem Innendurchmesser der Innenwand der Muffe in diesem Bereich angepasst ist. Durch die Passgenauigkeit des Dichtungsringes und dem Muffenende in diesem Bereich kann der Dichtungsring leicht eingesetzt werden, wobei durch die Abstützung des Fussendes gegen die Innenwand der Muffe im oberen Bereich des Längsschenkels eine Vorspannung nach radial aussen gegen die Muffe erreicht wird.

Zur weiteren Befestigung des Dichtungsringes am Muffenende ist der Haltering vorzugsweise formschlüssig zum Umgreifen des Muffenendes mit eingesetztem Dichtungsring ausgestaltet. Hierbei weist der innere Schenkel des Halteringes an seiner nach radial aussen zeigenden Umfangswand voneinander beabstandete Stützrippen auf, die einen leicht bogenförmigen Randbereich haben. Dieser Randbereich läuft zum Muffeninneren hin in das Ende des inneren Schenkels aus und ist der Krümmung des radial inneren, oberen Bereiches des Längsschenkels nach Einsetzen des Dichtungsringes in etwa angepasst. Hierdurch wird die Klemmwirkung des Halteringes nicht nur punktuell, sondern flächen- bzw. linienförmig auf den Längsschenkel übertragen.

Geeigneterweise hat der Haltering im Axialschnitt etwa eine U-Form, wobei seine Innen- und Aussenschenkel ungefähr gleich lang sind. Hierdurch wird sichergestellt, dass ein geringfügiges Verkanten bzw. Verkippen des Halteringes durch axial unterschiedliche Ansatzpunkte der Klemmkräfte eliminiert wird. Zum anderen wird bei einem gleich langen Innenschenkel wie der Aussenschenkel eine relativ weit nach axial in den Muffeninnenraum reichende Abstützkraft am inneren Ende des Halteringes erreicht, wodurch die Rückstellkraft im Bereich der Ringkante und der Lippendichtung verbessert wird.

Zur Erzeugung einer stabilen und festen Rohrsteckverbindung ist der kleinste Innendurchmesser des Halteringes etwa dem Aussendurchmesser des entsprechenden Spitzendes angepasst. Zur Erreichung der Abwinkelbarkeit des Spitzendes gegenüber der Achse der Muffe, was eine erhebliche Montageerleichterung beim Einbau mit sich bringt, ist der Innendurchmesser des inneren Schenkels des Halteringes vorzugsweise so gestaltet, dass er sich zum Muffeninnenraum hin leicht vergrössert, d.h., dass der innere Schenkel des Halteringes eine sich zum Muffeninnenraum leicht öffnende konische Gestalt hat. Durch diese Formgebung des inneren Schenkels des Halteringes ist es möglich, das Spitzende etwa in einem Winkelbereich von bis zu 5° gegenüber der Achse der Muffe zu kippen, wobei bei einer derartigen Kipplage des Spitzendes auf der gegenüberliegenden Seite der Rohrsteckverbindung im stirnseitigen Bereich des inneren Schenkels des Halteringes ein Auflagepunkt besteht, der bei montierter Rohrsteckverbindung auch als Scherlastbremse für im wesentlichen senkrecht zur Achse wirkende Kräfte fungiert.

Um die Abwinkelbarkeit auch bei vollständig eingeschobenem Spitzende zu ermöglichen, weist die Muffe mindestens zwei Innenwandbereiche auf. Der äussere, erste Innenwandbereich, der in die Muffenöffnung übergeht, hat dabei vorzugsweise gleichen Innendurchmesser. Dieser erste Innenwandbereich geht über eine Abschrägung mit kleiner werdendem Innendurchmesser in einen zweiten inneren Bereich über. Die Anordnung dieses zweiten inneren Bereiches der Muffe ist so getroffen, dass er in Richtung zum Muffeninneren hin einen etwas grösser werdenden Innendurchmesser aufweist. Mit anderen Worten ist dieser zweite Innenwandbereich nach innen leicht konisch öffnend gestaltet. Zudem ist die Dimensionierung und Ausrichtung bezogen auf die vollständig komplettierte Rohrsteckverbindung so getroffen, dass die Verlängerung der sich nach innen erweiternden, konischen Öffnung des inneren Schenkels des Halteringes mit der Innenwand des zweiten Innenwandbereiches der Muffe fluchtet. Beim Einschieben des Spitzendes bis zum zweiten Innenwandbereich wird dadurch auch bei bestehender Rohrsteckverbindung die Abwinkelbarkeit des Spitzendes um einen Winkel von etwa 3° gegenüber der Muffenachse gewährleistet. Trotz dieser Abwinkelbarkeit bleibt die Festigkeit, die Stabilität und die Dichtwirkung der Rohrsteckverbindung vollständig erhalten.

Der Lippendichtungsring und die Muffe mit Haltering sind vorzugweise so dimensioniert, dass vor dem Einschieben des Spitzendes die radial nach innen ragende Ringkante des Dichtungsringes einen grösseren Innendurchmesser aufweist als der Aussendurchmesser des Spitzendes. Angestrebt wird ein Innendurchmesser der Ringkante, der etwa im Innendurchmesser des Spitzendes entspricht. Bei dieser Dimensionierung und unter Berücksichtigung der bzw. des Verformungshohlraumes an der Innenwand der Muffe, kann beim Einsetzen des Spitzendes die Ringkante zunächst leicht um eine kleine Strecke nach radial aussen bewegt werden. Die Abstimmung der Abmessungen des Dichtringes einschliesslich des entstehenden Verformungshohlraumes bewirken zusammen mit der durch die Spreizung zwischen Fuss und Längsschenkel erzeugten Rückstellkraft des Dichtringes eine ausreichende und zuverlässige Dichtwirkung gegenüber der Aussenwand des Spitzendes.

Obwohl sich die Verwendung einer derartigen Rohrsteckverbindung besonders bei Kunststoffrohren anbietet, ist sie nicht darauf beschränkt und kann auch z.B. bei Steinzeugrohren oder Gusseisenrohren verwendet werden.

Die Erfindung wird nachfolgend anhand mehrerer schematischer Zeichnungen im Prinzip dargestellt und erläutert. Es zeigen:

Fig. 1 einen bruchstückartigen Teil eines Schnittes in Axialrichtung im Bereich eines Rohrmuffenendes mit vormontiertem Dichtungsring und mit einem Spitzende, das gerade über die axiale Länge des Halteringes eingeschoben ist;

Fig. 2 einen bruchstückartigen Teilausschnitt einer abgeänderten Form des Fusses des Dichtungsringes mit einem zusätzlichen Verformungshohlraum im Vergleich zu Fig. 1;

Fig. 3 einen bruchstückartigen Ausschnitt eines Axialschnittes durch ein Vorrichtungs-Formwerkzeug im geschlossenen Zustand der Vorrichtung und bereits eingedrückter Formmasse zur Herstellung der Dichtungsringe; und

Fig. 4 eine Prinzipdarstellung des Formwerkzeuges in einem Axialschnitt mit angedeuteten Öffnungs- und Ausfahrrichtungen der Werkzeugkomponenten.

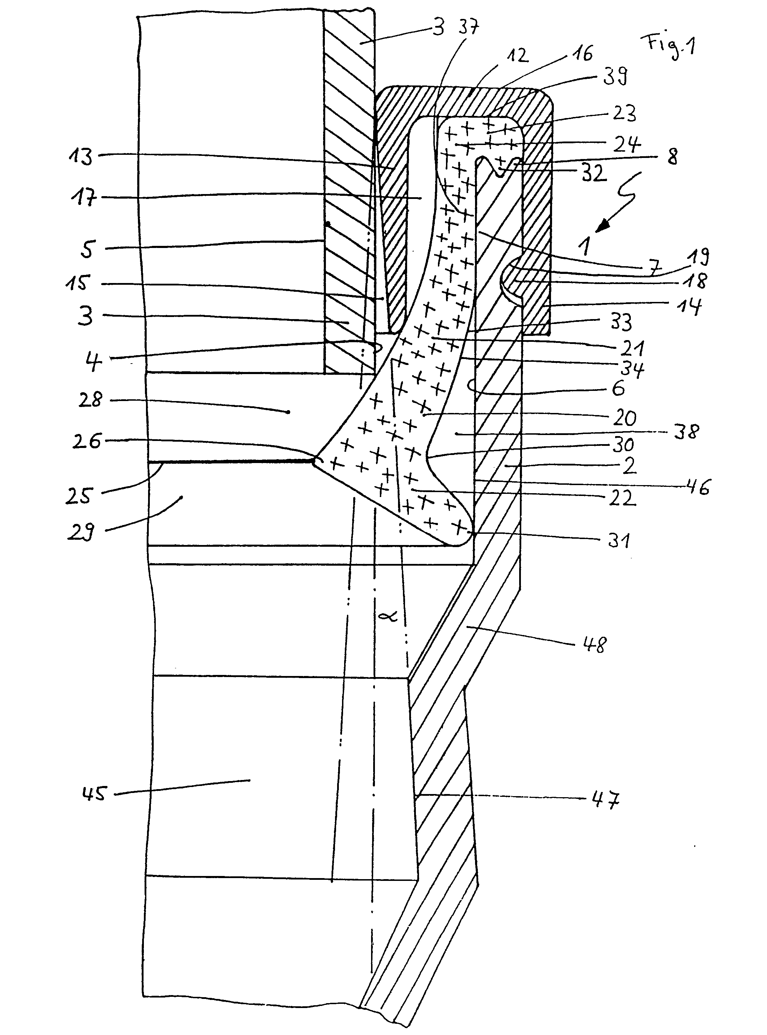

In Fig. 1 ist eine Rohrsteckverbindung 1 im Bereich der Muffenöffnung dargestellt, wobei ein Lippendichtungsring 20 auf die radiale Stirnfläche 8 aufgebracht ist. Der zur Muffenöffnung liegende Bereich des Lippendichtungsringes 20 und das Muffenende werden nach Fig. 1 von einem etwa U-förmigen Haltering 12 umgriffen. Ein Spitzende 3 ist in Fig. 1 so weit eingesetzt, dass es gerade in Berührung mit dem Lippendichtungsring 20 bzw. dessen radial innenliegende Aussenfläche 28 gelangt.

In der dargestellten Rohrsteckverbindung 1 sollen beispielsweise die Muffe 2, das Spitzende 3 sowie der Haltering 12 aus Kunststoff bestehen. Der Lippendichtungsring 20 selbst ist üblicherweise aus einer vernetzbaren Gummimischung gefertigt.

Die Muffe 2 ist so gestaltet, dass sie in axialer Richtung von der Muffenöffnung zum Muffeninnenraum 45 gesehen zunächst einen ersten Innenwandbereich 46 aufweist, der koaxial mit gleichem Durchmesser zur Muffenachse ausgebildet ist. An diesen ersten Innenwandbereich 46 schliesst sich über eine nach radial innen verlaufende Abschrägung 48 ein zweiter Innenwandbereich 47 an. Dieser Innenwandbereich 47 öffnet sich nach axial innen leicht, so dass eine Innenwandgerade in diesem Bereich mit der Muffenachse einen Winkel von etwa 3 bis 5° bildet.

Der Lippendichtungsring 20 weist im noch nicht eingesetzten Zustand, also vor der in Fig. 1 dargestellten Montage, in etwa eine L-Form auf. Als nicht eingebautes Einzelteil hat der Lippendichtungsring 20 einen Längsschenkel 21, dessen Aussenfläche 28 in den hier beschriebenen Beispielen geradlinig gestaltet ist. Der Längsschenkel 21 geht etwa in einem rechten Winkel in den Fuss 22 über, wobei die Aussenfläche 29 des Fusses 22 des Lippendichtungsringes 20 etwa senkrecht aufeinander stehen und eine Ringkante 25 bilden, die im eingebauten Zustand und eingeschobenem Spitzende als Lippendichtung wirkt.

Am Kopf 24 der L-Form des Lippendichtungsringes 20, d.h. im eingebauten Zustand an der Muffenöffnung, ist einstückig mit dem Längsschenkel ein Steg 23 angeformt. Dieser Steg 23 ist so dimensioniert, dass seine radiale Erstreckung nach aussen gerade der Wandungsstärke der Muffe 2 entspricht. Im Lieferzustand verläuft dieser Steg 23 etwa parallel zum Fuss des Lippendichtungsringes 20. Zusätzlich ist in der Darstellung nach Fig. 1 am Steg 23 in Richtung zum Fuss 22 bzw. zum Dichthammer zeigend, ein etwa dreieckförmiger Haltevorsprung 32 ausgebildet.

Da der Aussendurchmesser des oberen bzw. axial äusseren Bereiches 37 des Lippendichtungsringes 20 fertigungstechnisch passgenau auf den Innendurchmesser der Muffe 2 bzw. des ersten Innenwandbereiches 46 ausgelegt ist, hat der Haltevorsprung 32 bei eingesetztem Lippendichtungsring 20 primär die Funktion ein Ausweichen nach radial innen aufgrund der Verformungsspannung des Lippendichtungsringes 20 zu verhindern und den Steg 23 definiert an der radialen Stirnfläche 8 der Muffe festzulegen. Der Haltevorsprung 32 rastet daher beim Einsetzen in einer komplementären Einkerbung in der Stirnfläche 8 der Muffe ein.

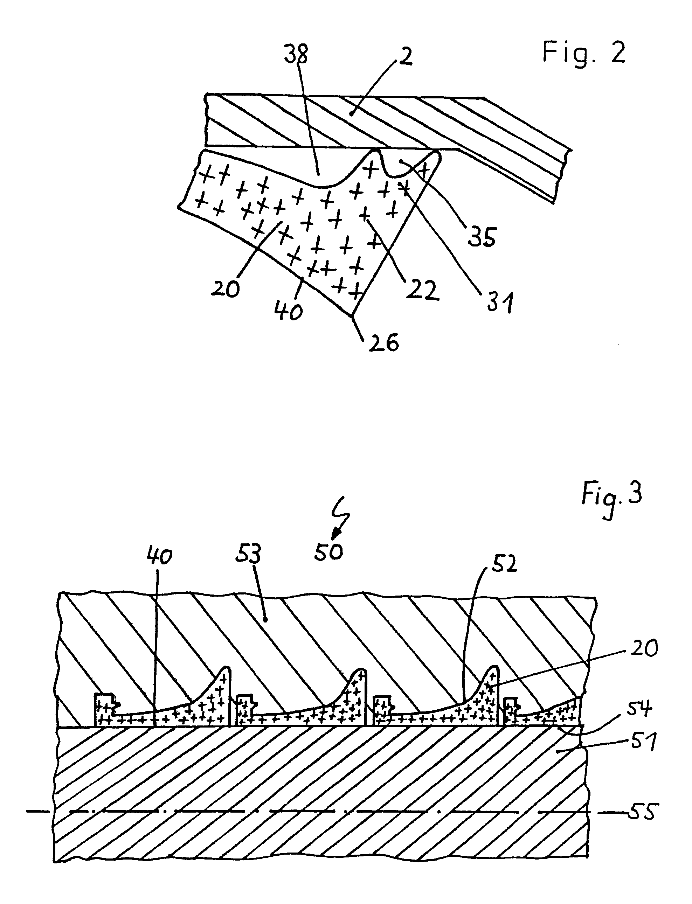

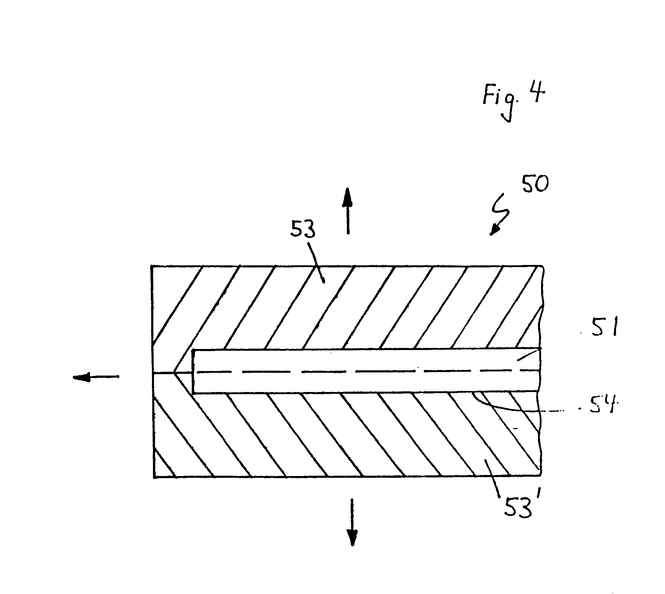

Wie deutlicher aus Fig. 3 zu erkennen ist, gehen der Längsschenkel 21 und der Fuss 22 des Lippendichtungsringes 20 mit einer zunehmenden Materialverstärkung in einem Übergangsbereich 30 ineinander über. Dieser Übergangsbereich 30 hat ein kontinuierlich verlaufendes Profil, wodurch Risse in diesem Bereich auch im dichtenden Zustand des Lippendichtungsringes 20 weitgehend vermieden werden. Mit Ausnahme des Haltevorsprunges 32 ist der Lippendichtungsring 20 auch mit seinem nach radial aussen zeigendem Profil ohne Hinterschneidungen ausgebildet. Dies ermöglicht überhaupt die fertigungstechnische rationelle Herstellung, da der Entformungsvorgang hierdurch unkompliziert wird. Um eine automatische Vormontage z.B. mit Vakuumsaugköpfen zu ermöglichen, weist der Lippendichtungsring 20 sowohl an der radialen Stirnfläche 39 des Stegs 23 als auch an der radial innenliegenden Aussenfläche des Längsschenkels 21 eine glatte, im wesentlichen plane Fläche auf. Hierdurch ist es möglich, dass ein Saugkopf an dieser Aussenfläche 28 angreift, wobei beispielsweise an der Stirnfläche 39 eine Anschlagplatte der Saugkopfeinrichtung anlegbar ist. Mithilfe einer derartigen Vorrichtung kann der Lippendichtungsring 20 dann auch vollautomatisch, gegebenenfalls sogar einschliesslich des Halteringes 12, in die Muffe 2 eingesetzt werden.

Beim Einsetzen des Lippendichtungsringes gelangt das in Fig. 1 abgerundet ausgebildete Fussende 31 in Anlage mit der Innenwand 6 der Muffe 2. Durch die grössere Länge des Fusses 22 gegenüber dem Steg 23 und den geradlinigen ersten Innenwandbereich 46 der Muffe 2, wird der Lippendichtungsring 20 mit seiner Ringkante 25 so nach radial einwärts gebogen, dass die ursprünglich geradlinige Aussenfläche 28 eine nach radial aussen zeigende Biegungslinie einnimmt. Die dadurch bewirkte Materialvorspannung des Dichtungsringes gewährleistet, dass im oberen Bereich 37 des Längsschenkels 21 und am Fussende 31 eine gegen die Innenwand der Muffe wirkende Kraftkomponente vorhanden ist, die den so eingesetzten Lippendichtungsring 20 montagefest hält.

Zur weiteren Befestigung ist in Fig. 1 der etwa gleiche Schenkel aufweisende U-förmige Haltering 12 stirnseitig auf den Steg und die Muffenöffnung aufgesetzt. Dieser biespielsweise als Kunststoffclip hergestellte Haltering 12 schnappt an der Aussenwand der Muffe 2 mit einem nach radial innenragenden Vorsprung 18 in eine etwa komplementär dazu angepasste, z.B. halbkreisförmige Ausnehmung 19 ein. Der Innenschenkel 13 des Halteringes 12 ist nach axial innen etwas verjüngt zulaufend gestaltet. Hierdurch öffnet sich seine innere Umfangsfläche 15 leicht konisch nach innen um einen Winkel von etwa 3 bis 5°. An der radial nach aussen orientierten Fläche des Innenschenkels 13 des Halteringes 12 sind lamellenartige Rippen 17 vorgesehen, die in einer leicht nach axial innen auslaufenden bogenförmigen Konfiguration der Biegung des eingesetzten Lippendichtungsringes 20 angepasst sind. Die Abmessung des Halteringes 12 ist so getroffen, dass eine radiale und axial nach innen gerichtete Klemmwirkung dadurch auf den Lippendichtungsring gegen die Muffe zu erzeugt wird. Axial gesehen greift das innere Ende des Innenschenkels 13 etwa auf der halben Länge des Längsschenkels 21 an, so dass beim Einschieben des Spitzendes 3 zunächst ein etwas leichteres nach radial aussen gerichtetes Auswandern des Lippendichtungsringes 20, auch aufgrund des an der Innenwand der Muffe 2 gebildeten Luft-Hohlraumes 38 möglich ist. Das stumpfe, nicht angefaste Spitzende 3 kann dadurch ohne grossen Kraftaufwand und ohne Beschädigung des Lippendichtungsringes 20 eingeschoben werden. Durch die Spreizwirkung zwischen dem etwa die zweifache Länge des Steges aufweisenden Fuss 22 und dem Längsschenkel 21 ist jedoch sichergestellt, dass eine ausreichende Rückstellkraft gegen die Aussenwand 4 des Spitzendes bei vollständig eingeschobenem Spitzende vorhanden ist, so dass die durch die Ringkante 25 gebildete Dichtlippe 26 voll zur Wirkung kommt.

Beim Spreizen des Lippendichtungsringes 20 im Übergangsbereich 30 kann das Fussende 31 axial nach innen an der Innenwand 6 der Muffe 2 bis zum Beginn der Abschrägung 48 gegebenenfalls gleiten. Durch den vorhandenen Hohlraum 38, der zwischen dem radial äusseren, mitttleren Bereich 33 des Längsschenkels 21 und dem Fuss 22 gebildet wird, bedarf es hierzu keiner allzu grossen Krafteinwirkung.

Das Spitzende 3 kann in der Rohrsteckverbindung 1 nach Fig. 1 bis in den zweiten Innenwandbereich 47 eingeschoben werden. Auch in dieser Lage ist dann durch die konisch nach innen zeigende Öffnung des inneren Schenkels 13 sowie des zweiten Innenwandbereiches 47 selbst eine leichte Abwinkelung des Spitzendes in der Muffe 2 möglich.

In Fig. 2 ist eine alternative Ausführungsform des Fusses 22 des Lippendichtungsringes 20 gezeigt. Neben dem in Fig. 1 dargestellten Hohlraum 38 weist das Beispiel nach Fig. 2 im Fussende 31 selbst eine weitere Verformungsausnehmung 35 auf. Im Beispiel hat diese Verformungsausnehmung 35 etwa leicht abgerundeten dreieckförmigen Charakter, wobei dies ringförmig umlaufend im Fuss 22 vorgesehen ist. Durch diese Verformungsringnut 35 ist es auch bei einem axial nicht an der Innenwand des wandernden Fussendes 31 möglich, beim Einsetzen des Spitzendes zunächst eine Verformung dieses Hohlraumes bzw. der beiden Hohlräume 38 und 35 herbeizuführen, um erst beim weiteren Einschieben des Spitzendes eine Art Verformungsverpressung des Lippendichtungsringes zu bewirken.

In Fig. 3 ist ein Schnitt durch ein zur Herstellung der Dichtungsringe und insbesondere des Lippendichtungsringes 22 verwendetes Formwerkzeug 50 bruchstückartig dargestellt. Das Formwerkzeug 50 weist einen zylindrischen Formkern 51 auf. Dieser Formkern 51 wird von zwei halbschalig ihn umgreifenden Formgesenken 53 und 53' (Fig. 4) umfasst. Im Ausführungsbeispiel sind die entsprechenden Formnester 52 für die Dichtungsringe 20 allein in den Formgesenken 53 bzw. 53' ausgebildet. Der Formkern 51 selbst weist eine geradlinige glatte Formfläche 54 auf. Diese Formfläche 54 formt sozusagen die radial innenliegende Gerade 40 des Längsschenkels 21 des Dichtungsringes 20.

Da im Ausführungsbeispiel der Dichtungsring 20 so profiliert ist, dass er nur eine minimale Hinterschneidung im Bereich des Haltevorsprunges 32 aufweist, kann beim Entformen der Dichtungsringe 20, beispielsweise mit einer im wesentlichen senkrecht zur Achse 55 des Formkernes 51 ausgeführten Öffnungsbewegung des oberen und unteren Formgesenkes 53 bzw. 53' aufgrund der minimalen Hinterschneidung leicht entformt werden. Bei diesem Formwerkzeug verbleiben die beispielsweise in einer Stückzahl von etwa 20 in einem Herstellungsverfahren erzielten Dichtungsringes nach dem Vernetzen der Kautschukformmasse und dem Öffnen des Formwerkzeuges 50 auf dem Formkern 51. Mittels einer Abstreifeinrichtung, die ring- oder greiferartig vorzugsweise an der Aussenfläche des Fusses 22 des Lippendichtungsringes angesetzt wird, können bei geöffneten Formgesenken 53 und 53' sämtliche Dichtungsringe 20 auf einmal sukzessive vom Formkern 51 ausgeschoben werden.

Der Verfahrensvorgang selbst mittels dieses Formwerkzeuges 50 erfolgt normalerweise durch Einspritzen der entsprechenden Kautschukformmasse in die Formnester 52. Die Formnester 52 sind so angeordnet, dass die axiale Länge des Lippendichtungsringes 20, z.B. seine Gerade 40 in Achsrichtung 55 des Formkernes 51 zu liegen kommt. Durch diese formtechnische Anordnung, die durch die besondere Profilgebung des Dichtungsringes ermöglicht ist, hat das Formwerkzeug im Vergleich zur auf einmal herstellbaren Anzahl von Dichtungsringen relativ kleine Abmessungen. Der Formungsvorgang selbst entspricht dabei z.B. dem hinreichend bekannten Spritzgiessverfahren mittels eines Extruders. Durch die etwa senkrecht zur Achse 55 des Formkernes 51 verlaufenden im wesentlichen planen Flächen des Steges 23 und des Fusses 22 des Dichtungsringes 20, ist es möglich, die Formnester mit nur geringem axialen Abstand zueinander anzuordnen.

In Fig. 4 ist die bevorzugte Möglichkeit des automatischen Entformungsvorganges mittels des in Fig. 3 bruchstückartig gezeigten Formwerkzeuges 50 dargestellt. Aus Vereinfachungsgründen sind in Fig. 4 die entsprechenden Formnester weggelassen worden. Nach dem Vernetzen der eingespritzten Formmasse in die einzelnen Formnester wird das obere bzw. untere Formgesenke 53 bzw. 53' in Pfeilrichtung etwa senkrecht zur Längsach-

se des Formkernes 51 geöffnet. Der Formkern 51 selbst kann dann mit den darauf verbleibenden Dichtungsringen in seiner Längsachsrichtung, in Fig. 4 z.B. nach links, axial ausgefahren werden. Im ausgefahrenen Zustand fasst eine Abstreifeinrichtung (nicht gezeigt) hinter den beispielsweise am äussersten rechten Ende des Formkernes 51 gebildeten Dichtungsring. Durch axiales Zurückziehen des Formkernes nach rechts bei stationärer Abstreifeinrichtung werden dadurch sämtliche Dichtungsringe vom Formkern abgestreift. Selbstverständlich kann die Abstreifeinrichtung so gestaltet sein, dass sie eine entsprechende Anzahl einzelner Abstreifgreifer aufweist, die so plaziert sind, dass diese jeweils an einem einzelnen Dichtungsring anliegen. Hierdurch würden Material-Stauchungsvorgänge vermieden und das Ausstossen der Dichtungsringe könnte noch zeitsparender realisiert werden.

## Patentansprüche

1. Dichtungsring (20) für eine aus Muffe (2) und Spitzende (3) gebildete Rohrsteckverbindung (1) mit einem durch Verformen und/oder Verpressen dichtenden Dichtungsbereich (22, 26), einem der Verankerung des Dichtungsringes auf oder im Bereich des Muffenkragens dienenden Haltebereich (23) und einem diese beiden Bereiche verbindenden Verbindungsbereich (21), wobei der kleinste freie Querschnitt (25) des sich zum Muffenkragen hin erweiternden Dichtungsringes bei bestimmungsgemäss in der Muffe vormontiertem Dichtungsring vor dem Einschub des Spitzendes im Bereich des Dichtungsbereiches liegt, dadurch gekennzeichnet, dass die Innenfläche des Dichtungsringes (20) im freien, unmontierten, entspannten, montage- und funktionsrichtig gewendeten Zustand des Dichtungsringes eine Zylinderfläche (40) ist.

2. Dichtungsring nach Anspruch 1, dadurch gekennzeichnet, dass der Dichtungsbereich (26, 22) und der Verbindungsbereich (21) im Axialschnitt des Dichtungsrings zusammen ein L-förmiges oder V-förmiges Schnurprofil bilden.

3. Dichtungsring nach einem der Ansprüche 1 oder 2, dadurch gekennzeichnet, dass der Haltebereich als aussenflanschartiger Steg (23) ausgebildet ist, der bei montiertem Dichtungsring auf der Stirnfläche (8) des Muffenkragens aufliegt.

4. Muffe mit vormontiertem Dichtungsring (20) nach Anspruch 1, der durch einen auf die Muffe aufgesetzten Haltering (12) in Form eines geschlossenen U-Profilringes in der Muffe fixiert ist, dadurch gekennzeichnet, dass die innere Umfangsfläche (15) des Halteringes (12) eine Konusfläche ist, deren Durchmesser, bezogen auf die Muffe, auf die der Haltering bestimmungsgemäss aufgesetzt ist, axial aussen kleiner als axial innen ist.

5. Muffe nach Anspruch 4, dadurch gekennzeichnet, dass die innere Profilbreite zwischen den Schenkeln (13, 14) des Halteringes (12) deutlich grösser als die Summe der Wandstärken der Muffe (2) und des Dichtungsringes (20; 21) im Bereich des Halteringes ist, und dass auf der im Inneren des U-Profils liegenden Wandfläche des inneren Ringschenkels (13) des Halteringes mit gleichem Winkelabstand voneinander radial stehende und axial verlaufende formsteife Lamellenrippen (17) angeordnet sind, die den Dichtungsring gegen die Muffeninnenwand (6) zwingen, wenn der Haltering bestimmungsgemäss montiert ist.

6. Muffe nach Anspruch 4, dadurch gekennzeichnet, dass die Muffe (2) mindestens zwei über eine Abschrägung (48) ineinander übergehende Innenwandbereiche (46, 47) aufweist, dass der axial äussere erste Innenwandbereich (46) etwa parallel zur Muffenachse verläuft und dass der zweite Innenwandbereich (47) sich nach innen öffnend unter einem Winkel α fluchtend mit der inneren Umfangsfläche (15) des inneren Schenkels (13) des Halteringes (12) vorgesehen ist.

## Claims

1. Sealing ring (20) for a pipe joint (10) consisting of a socket (2) and a spigot end (3) comprising a sealing zone (22, 26) which ensures sealing by deformation and/or compression, a retaining zone (23) serving to anchor the sealing ring on or within the zone of the socket collar and a joining zone (21) connecting these two zones, the smallest free transverse section (25) of the sealing ring which widens towards the socket collar being located within the region of the sealing zone when the sealing ring is functionally pre-mounted within the socket prior to the insertion of the spigot end, characterized in that the inner surface of the sealing ring (20) being in a free, non-mounted, relaxed, and for mounting and operating properly turned condition is a cylindric surface (40).

2. Sealing ring according to Claim 1, characterized in that the sealing zone (22, 26) and the joining zone (21) together form a L-shaped or V-shaped profile in the axial section of the sealing ring.

3. Sealing ring according to Claim 1 or 2, characterized in that the retaining zone is formed as an outwardly pointing flange-like bridge (23) being supported on the face (8) of the socket collar.

4. Socket with pre-mounted sealing ring (20) according to Claim 1, which is fixed within the socket by a retaining ring (12) placed onto the socket and formed as a closed annular U-profile, characterized in that the inner circumferential surface (15) of the retaining ring (12) is a conical surface having a diameter being smaller at the outside than at the inside with respect to the socket to which the retaining ring is functionally placed.

5. Socket according to Claim 4, characterized in that the inner width of the profile between the legs (13, 14) of the retaining ring (12) is markedly larger than the sum of the wall thicknesses of the socket (2) and of the sealing ring (20; 21) within the region of the retaining ring and in that non- deformable lamellar ribs (17) are located at the wall surface of the inner annular flange (13) of the retaining ring inside the U-profile and are spaced from one another with the same angular distance, radially protruding and axially extending, said ribs forcing the sealing ring towards the inner surface (6) of the socket when the retaining ring is functionally mounted.

6. Socket according to Claim 4, characterized in that the socket (2) comprises at least two inner wall zones (46, 47) uniting into one another via a bevel (48), in that the first inner wall zone (46) located outside in axial direction extends approximately parallel to the axis of the socket, and in that the second inner wall zone (47) is provided for opening itself to the inside with an angle α and aligning with the inner circumferential surface (15) of the inner legs (13) of the retaining ring (12).

**Revendications**

1. Bague d'étanchéité (20) pour raccord de tubes à emboîtement (1) formé d'un manchon (2) et d'une extrémité en pointe (3), comprenant une zone d'étanchéité (22, 26) assurant l'étanchéité par déformation et/ou compression, une zone de maintien (23), servant à l'ancrage de la bague d'étanchéité sur ou dans la zone du collier de manchon, et une zone de raccordement (21) reliant ces deux zones, la plus petite section transversale libre (25) de la bague d'étanchéité, qui s'évase dans la direction du collier du manchon, se trouvant, lorsque la bague d'étanchéité est montée préalablement à sa place dans le manchon avant l'insertion de l'extrémité en pointe, dans la zone d'étanchéité, caractérisée en ce que, lorsque la bague d'étanchéité est à l'état libre, non montée, sans contrainte et prête au montage et au fonctionnement, la surface intérieure de la bague d'étanchéité (20) est une surface cylindrique (40).

2. Bague d'étanchéité selon la revendication 1, caractérisée en ce que l'ensemble constitué par la zone d'étanchéité (26, 22) et la zone de raccordement (21) présente en coupe, dans le sens de l'axe de la bague d'étanchéité, un profil en L ou en V.

3. Bague d'étanchéité selon l'une des revendications 1 ou 2, caractérisée en ce que la zone de maintien a la forme d'une bride extérieure (23) qui, après montage de la bague d'étanchéité, s'applique contre la surface frontale (8) du collier du manchon.

4. Manchon comportant une bague d'étanchéité (20) préalablement montée selon la revendication 1 et fixée dans le manchon par une bague de maintien (12) en forme de profil annulaire fermé ayant une section en U, placée sur le manchon, caractérisé en ce que la surface du périmètre intérieur (15) de la bague de maintien (12) est une surface conique dont le diamètre, déterminé par rapport au manchon sur lequel la bague de maintien est montée, est plus petit à l'extérieur qu'à l'intérieur, dans le sens axial.

5. Manchon selon la revendication 4, caractérisé en ce que la largeur intérieure du profil de la bague de maintien (12), entre ses ailes (13, 14), est nettement plus grande que la somme des épaisseurs de paroi du manchon (2) et de la bague d'étanchéité (20, 21), dans la zone de la bague de maintien, et en ce que la surface de la paroi de l'aile intérieure (13) de la bague de maintien comporte, à l'intérieur du profil en U, réparties à des distance angulaires égales, des nervures lamellaires (17), orientées dans le sens radial, qui poussent la bague d'étanchéité contre la paroi intérieure (6) du manchon lorsque le montage de la bague de maintien est réalisé.

6. Manchon selon la revendication 4, caractérisé en ce que le manchon (2) comporte au moins deux zones de paroi intérieure (46, 47) qui se raccordent l'une à l'autre par une partie oblique (48), en ce que la première zone de paroi intérieure (46), qui est située à l'extérieur dans le sens axial, est à peu près parallèle à l'axe du manchon, et en ce que la deuxième zone de paroi intérieure (47), qui s'évase vers l'intérieur suivant un angle α, se trouve dans le prolongement de la surface périphérique intérieure (15) de l'aile intérieure (13) de la bague de maintien (12).

Fig. 1

Fig. 2

Fig. 3

Fig. 4